# EUROPEAN PATENT SPECIFICATION

(11) **EP 0 773 871 B1**
(45) Date of publication and mention of the grant of the patent: **15.09.1999**
(21) Application number: 95928151.0
(22) Date of filing: 26.07.1995
(51) Int. Cl.: B41M 5/38, G02B 5/124, G02B 5/128, B60R 13/10, B32B 27/06, B44F 1/02, B44C 1/17

(54) **RETROREFLECTIVE GRAPHIC ARTICLES AND THERMAL TRANSFER ARTICLES**
RETROREFLEKTIERENDE GRAPHISCHE GEGENSTÄNDE UND GEGENSTÄNDE FÜR DIE THERMISCHE ÜBERTRAGUNG
ARTICLES GRAPHIQUES RETROREFLECHISSANTS ET ARTICLES A TRANSFERT THERMIQUE

(30) Priority: 26.07.1994 US 280467
(43) Date of publication of application: 21.05.1997
(73) Proprietor: MINNESOTA MINING AND MANUFACTURING COMPANY, St. Paul, Minnesota 55133-3427 (US)
(72) Inventor: PHILLIPS, Nancy, H., Saint Paul, MN 55133-3427 (US); BAILEY, Terry, R., Saint Paul, MN 55133-3427 (US); NGUYEN, Thanh-Huong, T., Saint Paul, MN 55133-3427 (US); POSS, Steven, E., Saint Paul, MN 55133-3427 (US); HO, Chia-Tie, Saint Paul, MN 55133-3427 (US)
(74) Representative: VOSSIUS & PARTNER
(86) International application number: US9509466
(87) International publication number: WO9603285

(56) References cited:
- EP-A- 0 222 240
- EP-A- 0 602 599
- WO-A-94/13496

## Description

In general, this invention relates to retroreflective graphic articles, for example signs, license plates, and the like, and thermal transfer articles and methods for their production.

Multilayer graphic articles may be applied to a variety of surfaces for decorative, informational, and/or functional reasons. These multilayer constructions often contain one or more continuous or non-continuous color layers which have been thermally transferred from a carrier film, or coated, printed, or laminated onto a substrate.

Decorative graphic articles are typically highly contrasting polychromatic constructions that enhance the visual appeal of surfaces to which they are applied, such as motor vehicles, marine craft, commercial or residential real estate, signs, store displays and the like. Informational graphic articles provide directions, location indicia, instructions, and identification when used, for example, to construct road signs and license plates. Functional graphic articles impart weather protection and wear resistance to surfaces to which they are applied, especially outdoor surfaces.

Color layers in presently known graphic articles often contain a poly(vinylchloride) ("PVC") binder blended with various color agents, volatile organic solvents, and plasticizers. PVC binders, which typically make up 30 to 50 weight percent of a color layer formulation, are not considered to be environmentally friendly. Volatile organic solvents typically provide 40 to 60 weight percent of a formulation. For various environmental and health reasons, the reduction or elimination of these solvents is desirable. Reduction or elimination of the use of PVC plasticizers is also desirable. Plasticizers can migrate in adjacent layers of the graphic article and cause visual changes to both the color layer and surrounding members which could adversely affect the stability of the color layer or appearance of the graphic article.

Presently known color layer formulations are compatible with only a limited class of substrates, primarily PVC, acrylics, and urethanes. These substrates can have poor flexibility and PVC is not environmentally desirable.

Accordingly, a substantial need exists for eliminating or reducing the use of PVC-based materials (and their associated solvents and plasticizers) in both color layer formulations and graphic articles, and in articles and methods used for their production, e.g., donor elements such as mass thermal transfer ribbons and hot stamp foils.

It has long been known to provide retroreflective articles with cover films (for example, made of polymethylmethacrylate, polyvinylchloride, polyester, etc.) to improve the retroreflective performance which is provided under wet conditions and to protect the retroreflective elements. See, for example, U.S. Patent Nos. 2,407,680 (Palmquist et al.), 3,190,178 (McKenzie), and 4,025,159 (McGrath). To achieve improved durability, embossability, and abrasion resistance, improved retroreflective sheetings with new selections of materials for cover films are now known, e.g., including ethylene/acrylic acid copolymers as disclosed in U.S. Patent Nos. 4,664,966 (Bailey et al.), 4,767,659 (Bailey et al.), 4,896,943 (Tolliver et al.), and 5,066,098 (Kult et al.). A common problem with such cover film materials is that in order to achieve satisfactory adhesion of imaging materials thereto, such as is used to print legends on and/or color the retroreflective article, surface priming layers and/or techniques must be employed. The need exists for ink formulations and thermal transfer articles, e.g., mass thermal transfer ribbons and hot stamp foils, having color layers that can be readily and easily applied to such cover films without using priming layers or techniques.

It is known to form graphic patterns on substrates using transfer articles bearing predesignated designs. G.B. Patent No. 1,218,058 (Hurst et al.) discloses transfers with an adhesive layer applied to only those areas intended to be transferred to the substrate; U.S. Patent Nos. 4,786,537 (Sasaki) and 4,919,994 (Incremona et al.) disclose transfer graphic articles wherein the graphic design is formed via imagewise differential properties within the transfer film itself. One problem with such approaches is that a large and varied inventory must be maintained in order to provide a variety of graphic patterns.

Hot stamping foils comprising a carrier, one or more color layers, and an adherence layer have been known for some time. Such films have been used to provide imagewise graphic patterns, e.g., alphanumeric or decorative legends, to substrates via imagewise application of heat and/or contact or pressure. In some embodiments, additional members such as release layers are used to facilitate desired performance. In some embodiments, so-called "texture layers" and/or "ticks", metal layers, etc. are used as well to yield desired appearance. Hot stamping foils are also sometimes called hot stamp tapes or thermal transfer tapes. Other related thermal transfer methods are known, e.g., using mass thermal transfer ribbons comprising a carrier releasably bonded to a color layer that is thermally transferred to a desired substrate.

The color layer(s), adherence layer (if any), and any other layers (if any) of the thermal transfer element that are to be selectively applied to the substrate should split or fracture in desired manner in order for the applied graphic pattern to have a desired edge appearance. Some illustrative examples of previously known hot stamping foils are disclosed in U.S. Patent Nos. 3,770,479 (Dunning) 3,953,635 (Dunning), and 4,084,032 (Pasersky).

An advantage of the foregoing techniques is that the transfer film may be made as a uniform sheet, i.e., with no specific latent image embodied therein. The applicator defines the graphic pattern by controlling the application process, e.g., imagewise application of heat and/or contact pressure. This permits maintenance of a smaller inventory of thermal transfer element material.

One well known use of hot stamping foils is to print legends on vehicle identification plates. For example, license plates produced using hot stamping foils have been used in Austria, Australia, Finland, Germany, Ireland, Portugal, and Switzerland. One commercially available hot stamping foil currently used on license plates with polyvinyl chloride cover films is believed to comprise a polyester carrier, about 28 microns thick; a color layer based on acrylic resins such as polymethyl methacrylate and containing carbon black pigments, about 5 microns thick; and an acrylate-based adherence layer, about 5 microns thick. Examples of resins that are believed to have been used in adherence layers include polyvinyl alcohol copolymers, nitrocellulose, and methyl methacrylate/butyl methacrylate copolymers.

Recently improved retroreflective sheetings have been made available which have cover films made of olefin-based materials or polyurethane-based materials to improve certain performance. As disclosed in the aforementioned U.S. Patent No. 4,896,943 (Tolliver et al.), olefin-based cover films, e.g., ethylene/acrylic acid copolymers, can provide superior properties including abrasion and dirt resistance. Many conventional hot stamping foils do not achieve good adherence to such cover sheets, however, resulting in graphic patterns having unsatisfactory durability and performance.

More recently, U.S. Patent No. 5,393,950 (Caspari) discloses hot stamping foils well suited for use on retroreflective articles wherein the foils comprise a carrier, optionally a release control layer, a color layer, and an adherence layer wherein the adherence layer comprises, and may consist essentially of, a mixture of an ethylene copolymer dispersion and an acrylic dispersion.

WO 94/13496 (Ho et al.) discloses multilayer graphic articles comprising a buried color layer wherein the color layer comprises a color agent in a copolymeric binder. The binder comprises the copolymerization product of an olefinic monomer and a second monomer having a pendant carboxylic group.

The need exists for improved hot stamping foils which can be used to form durable graphic patterns on such cover sheets and a method for forming such graphic patterns.

The present invention provides novel retroreflective graphic articles made using ink formulations that provide surprising utility. Retroreflective articles of the invention exhibit good exterior durability, abrasion resistance, flexibility if desired, clear, legible graphics, uniform color and appearance (i.e., are substantially free of streaking and blotching), and consistent color under both ordinary diffuse lighting conditions and retroreflective conditions if desired. As used herein the term *"*graphic article*"* refers to a retroreflective signage article, whereas the term *"*thermal transfer article*"* refers to an article having a thermally transferable color layer thereon, the transferable color layer derived from the ink formulations described herein.

In brief summary, retroreflective graphic articles of the invention as claimed in claim 1 comprise a retroreflective base sheet and at least one color layer disposed in the effective optical path of the base sheet. The base sheet may be an optically complete retroreflective construction, e.g., a sheet of high intensity sheeting, or may be an optically incomplete construction that needs an additional component in order to be retroreflective. In either instance, however, the color layer is disposed in the article so as to be in the path of light which is retroreflected by the resultant article. The color layer comprises a color agent and a latent crosslinker in a copolymeric binder.

Broadly, the binder comprises the copolymerization product of an olefinic monomer (preferably ethylene) and a second monomer having a pendant carboxyl group (preferably acrylic or methacrylic acid). The first monomer provides from 99 to 70 mole percent (more preferably, 75 to 85 mole percent) while the second monomer correspondingly provides from 1 to 30 mole percent (more preferably from 15 to 25 mole percent) of the binder: The copolymeric binder may be supplemented with a secondary binder such as an acrylic, styrenated acrylic, or urethane polymer. It is also supplemented with suitable crosslinking agents such as polyaziridines, butylated melamines, metal salts, etc.

Numerous color agents are useful within the scope of the invention including organic pigments, inorganic pigments, metallic (for example, aluminum) flakes, glass flakes, pearlescent materials, and dyes.

Retroreflective graphic articles of the invention may include multiple color layers each of which may be continuous or discontinuous relative to the substrate on which it is disposed and any other color layers in the graphic article. Such constructions are particularly preferred for providing multicolored graphic articles.

Retroreflective graphic articles of the invention may be applied to a wide variety of substrates including motor vehicles, marine craft, snowmobiles, sign faces and the like.

Another aspect of the invention is a thermal transfer article (e.g., a mass thermal transfer ribbon or hot stamp foils) as claimed in claim 9 useful in producing retroreflective graphic articles of the invention, the thermal transfer articles comprising a carrier having at least one major surface, the major surface having a color layer removably adhered thereto, wherein the color layer comprises the color layer described herein. The thermal transfer articles of the invention comprise a crosslinking resin adapted to crosslink the copolymer of the color layer either during or after thermal transfer of the color layer to a retroreflective substrate. Illustrative crosslinking resins include polyaziridines and melamines.

Another aspect of the invention is a method of making a retroreflective graphic article as claimed in claim 19, the method comprising the steps of:
(a) selecting a thermal transfer article of the invention, comprising a crosslinking resin in the color layer;
(b) selecting a retroreflective substrate (i.e., either a substrate that is retroreflective or a component that is to be incorporated into a retroreflective article); and
(c) contacting the color layer of the thermal transfer article to the retroreflective sheeting (i.e., either to a substrate that is retroreflective or to a component that is to be incorporated into a retroreflective article) under sufficient heat and pressure to transfer at least a portion of the color layer to the retroreflective sheeting. In some embodiments the method further includes (d) further treating (e.g., via heating, actinic radiation exposure, etc.) the product of step (c) to crosslink the copolymer within general formula (I) with the crosslinking resin.

The invention will be more fully explained with reference to the following drawings in which similar reference numerals designate like or analogous components throughout and in which:
Figure 1 is a cross-sectional view of a portion of an embedded-lens embodiment of retroreflective sheeting of the invention;
Figure 2 is a cross-sectional view of a portion of an encapsulated-lens, microsphere-based embodiment of retroreflective sheeting of the invention;
Figure 3 is a cross-sectional view of a portion of a cube-corner-based embodiment of retroreflective sheeting of the invention;
Figure 4 is cross-sectional view of a thermal transfer article in accordance with the invention; and
Figure 5 is a schematic of an inventive thermal mass transfer method.

These figures, which are idealized, are not to scale and are intended to be merely illustrative and non-limiting.

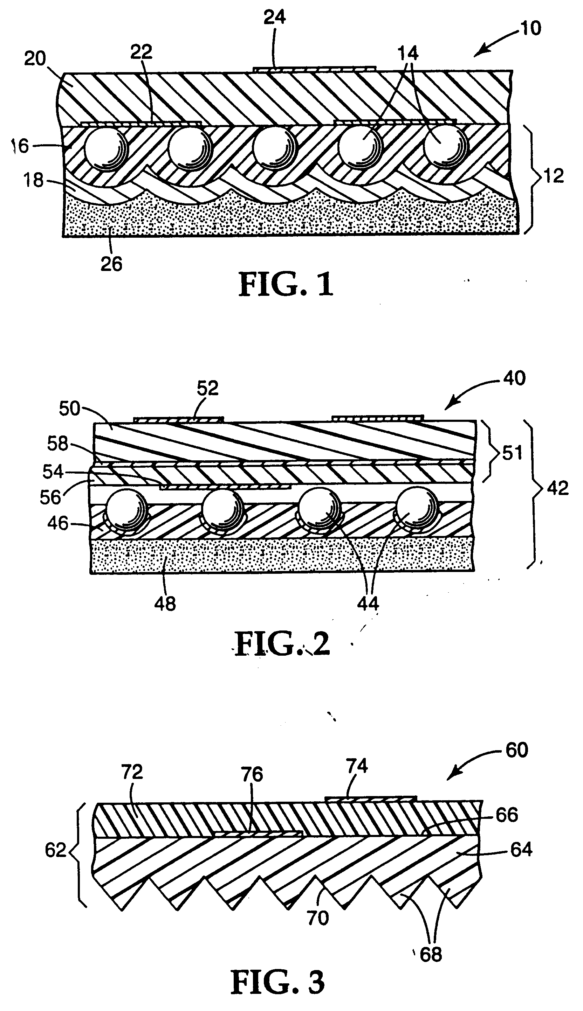

An illustrative retroreflective graphic article embodiment of the invention is illustrated in Figure 1 wherein article 10 comprises retroreflective base sheet 12 comprising a monolayer of elements 14 embedded in binder layer 16 with underlying reflecting layer 18. Such retroreflective base sheets are well-known and disclosed in, for example, U.S. Patent Nos. 4,664,966 and 4,983,436 (both Bailey et al.). Illustrative examples of materials used in such binder layers include polyvinyl butyral and urethane-extended polyester. Sheeting 10 also comprises transparent cover film 20 on the front side of base sheet 12 and is illustrated with graphic pattern 22 disposed on the front surface of base sheet 12 between the base sheet and cover film 20 and graphic pattern 24 on the outside surface of cover film 20. Illustrative examples of materials used in cover films of such constructions include ethylene acrylic acid copolymers, polyvinyl chlorides, and alkyds. It has been found that inks of the invention can achieve high adhesion to polyvinyl butyral and ethylene/acrylic acid copolymer layers without the use of corona treatment or other adhesion promoting priming steps. Sheeting 10 also comprises optional adhesive layer 26.

Another embodiment of a retroreflective sheeting of the invention is illustrated in Figure 2 wherein article 40 comprises encapsulated-lens retroreflective base sheet 42 comprising a monolayer of retroreflective elements 44 (each comprising a glass microsphere with an aluminum reflective layer on the back side thereof) partially embedded in binder layer 46 with optional layer of adhesive 48 on the back side thereof. Sheet 42 also comprises cover film 51 disposed in front of retroreflective elements 44 such that they have an air-interface, typically sealed to the rest of sheet 42 with a pattern of intersecting bonds (not shown). A number of encapsulated-lens retroreflective sheetings are well-known, see for example, U.S. Patent Nos. 4,025,159 (McGrath), 4,896,943 (Tolliver et al.), and 5,066,098 (Kult et al.). Illustrative examples of materials that may be used as cover films include polyethylene, polypropylene, copolymers of ethylene (e.g., ethylene/acrylic acid copolymer), polymethylmethacrylates, etc. In accordance with the present invention, sheeting 40 is illustrated with optional graphic pattern 52 disposed on the front surface of cover film 51, optional graphic pattern 54 on the inner surface of cover film 51, and optional color layer 58 within the structure of cover film 51.

Cover film 51 in the embodiment illustrated is one such as is disclosed in U.S. Patent No. 5,066,098 wherein cover film 51 is made up of main layer 50 and secondary layer 56. In accordance with the invention disclosed in that patent, secondary layer 56 comprises material which will resist intrusion or embedment of microspheres 44 during sealing such that a resultant sheeting with higher whiteness (or truer color if binder layer 56 is of another color), e.g., the softening point of secondary layer 56 is higher than that of main layer 50. In illustrative embodiments, main layer 50 comprises one or more homopolymers of ethylene or propylene, copolymers comprising a major portion by weight of at least one of ethylene or propylene and a minor portion by weight of at least one comonomer, e.g., acrylic acid, methacrylic acid, vinyl acetate, urethane, nylon, etc.; secondary layer 56 comprises one or more of PERMUTHANE U26-248 thermoplastic polyurethane from Stahl USA, NEOREZ Urethane Dispersion, NEOCRYL Acrylic Dispersion, polyolefin polymers with higher Vicat Softening Points than the main layer, vinyls, polyesters, etc.; and binder layer 44 comprises a thermoplastic urethane binder, e.g., Q-THANE P3429 Urethane Resin. Cover film 51 might further comprise a prime layer (not illustrated) on its outer surface. An advantage of the inks of the present invention, is that such prime layers are not necessary. Cover film 51 is illustrated with color layer 58, made in accordance with the present invention, which can be substantially continuous as illustrated or may be in imagewise graphic pattern if desired. An advantage of the present invention is that if color layer 58 is continuous, it will provide delamination resistant bonding to both main layer 50 and secondary layer 56. Such embodiments of the invention have exhibited superior delamination resistance as compared to similar article not having color layer 58.

Another embodiment of a retroreflective sheeting of the invention is illustrated in Figure 3 wherein article 60 comprises cube-corner type retroreflective base sheet 62 which comprises sheet 64 with flat front surface 66 and a plurality of cube-corner elements 68 protruding from rear surface 70 thereof. Base sheet 62 also comprises optional abrasion resistant cover sheet 72 on the front surface thereof. Illustrative cube-corner type retroreflectors are disclosed in U.S. Patent Nos. 3,712,706 (Stamm), 4,243,618 (Van Arnam), 4,349,598 (White), 4,588,258 (Hoopman), 4,775,219 (Appeldorn et al.), and 4,895,428 (Nelson et al.). In accordance with the invention, sheeting 60 comprises exposed graphic pattern 74 on the outside or front surface of cover sheet 72 and embedded graphic pattern 76 on the rear surface of cover sheet 72, i.e., between cover sheet 72 and sheet 64. Typically, cube-corner elements 68 will be encapsulated (not shown), such as is disclosed in U.S. Patent No. 4,025,159 (McGrath).

In each of the graphic article embodiments illustrated, a graphic pattern is provided in the "effective optical path" of the retroreflective base sheet. As described above, the base sheet may be an optically complete retroreflective construction, i.e., a sheet of high intensity sheeting, e.g., base sheet 42 in Figure 2, or may be an optically incomplete construction that needs an additional component in order to be retroreflective, e.g., base sheet 12 in Figure 1. In either instance the color layer is disposed in the article so as to be in the path of light which is retroreflected by the resultant article. By "effective optical path" it is meant that the graphic pattern lies within the path taken by incident light that is retroreflected by the resultant article. In this manner, the graphic pattern imparts desired color to the light that is retroreflected.

One of the advantages of the present invention is the water-borne inks discussed herein (and the thermal transfer articles provided herein that are produced using same) can be used to provide color layers and graphic patterns on retroreflective sheetings without using primers. For instance, when applied to ethylene/acrylic acid cover films, the vinyl-based, solvent-borne inks that are currently typically used with retroreflective sheetings typically require priming by application of special treatments or formation of additional layers. The present invention provides retroreflective sheets made without such prime treatments or layers. Another advantage is that inks of the invention (and the thermal transfer articles produced using same) can be used to provide highly transparent color layers which are necessary for good retroreflective performance.

In a broad embodiment of the invention, only one color layer need be provided. However, in many preferred graphic articles, more than one color layer is desirable, especially where a multicolored graphic article is sought. A graphic pattern may be continuous and cover substantially the entirety of the retroreflective article or be discontinuous and cover only a portion of it in an imagewise manner as desired. If desired, more than one color layer may be provided in a graphic article or thermal transfer article of the invention, with layers being overlapping in some areas to achieve additive color effects or being substantially non-overlapping as desired. When more than one color layer is used, the layer may have substantially the same formulation, perhaps with only the color agent component being changed as necessary to achieve the desired color, or the formulations may be varied. For instance, if a first color layer is to be exposed and a second color layer within the article is to be embedded, it may be desirable to optimize the formulation for the first layer to yield a layer that is more abrasion and weather resistant.

As desired, color layers in graphic articles of the invention may be very thin, e.g., a dry thickness of less than about 2.5 microns (0.1 mil), or thick, e.g., a dry thickness of between about 10 to 50 microns (0.5 to 2.0 mils) for example.

Color layers useful in the invention may be provided by an aqueous solution emulsion or dispersion comprising a binder, a latent crosslinker, a color agent, and various optional ingredients, which is either coated directly onto a retroreflective substrate as an ink, or coated onto a removable carrier to produce a thermal transfer article of the invention. The binder includes in major portion of a copolymeric binder that preferably comprises the copolymerization product of an olefinic monomer and a second monomer containing a pendant carboxyl group. These copolymeric binders have the following general formula: 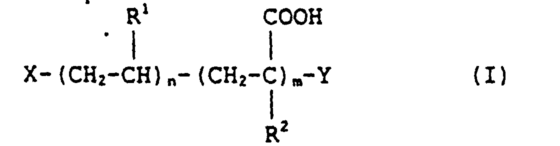 wherein R¹ is either H or an alkyl group containing one to eight carbon atoms; R² is (1) H, (2) an alkyl group containing one to six carbon atoms, (3) -CN, (4) an ester group, or (5) -R³-COOH, wherein R³ is any alkylen group, e.g., typically containing one to eight carbon atoms; X and Y are independently a residue of the olefinic monomer or a residue of the second monomer; n is a number selected such that the olefinic monomer provides from about 70 to 99 mole percent of the copolymeric binder; and m is a number selected such that the second monomer correspondingly provides from about 1 to 30 mole percent of the copolymeric binder.

The most preferred copolymeric binders are ethylene acrylic acid and ethylene methacrylic acid copolymers as they impart very useful combinations of flexibility, film strength, and adhesion to resultant color layers. In these materials, the ethylene monomer preferably provides from about 85 to 95 mole percent of the binder while the acrylic acid or methacrylic acid monomer (as the case may be) correspondingly provides from about 5 to 15 mole percent. It has been observed that using relatively greater amounts of the acrylic acid or methacrylic acid tends to increase the solubility in water of the resultant binder and ink.

Illustrative examples of suitable commercially available copolymeric binders include ADCOTE™-50T4983 having approximately 20 weight percent (9 mole percent) acrylic acid and a melt index of 300, ADCOTE™-50T4990 having 20 weight percent acrylic acid (9 mole percent) and a melt index of 1300, and ADCOTE™-56220 having 13 weight percent (7.5 mole percent) methacrylic acid and a melt index of 60. Each of these materials is available from Morton International. Also useful is MICA™-927 having 20 weight percent acrylic acid (9 mole percent) and a melt index of 300, available from Mica Corp.

The commercially available copolymeric binders are typically provided as a salt in which the carboxylic acid functionality has been neutralized with a base so as to improve the aqueous dispersibility of the resin. Consequently, it will be understood that formula I above includes basic salts thereof. Useful bases for neutralizing the carboxylic acid functionality include ammonia and other amines. Sodium hydroxide and potassium hydroxide may also be used but are less preferred due to concerns of moisture sensitivity and non-evaporation of the metal ion.

The copolymeric binder may be blended or supplemented with an additional, secondary binder to improve the hardness, tensile strength, heat resistance, and/or environmental weather resistance of the color layer as well as its adhesion to the substrate on which it is disposed. Particularly useful in this regard are waterborne urethane, acrylic, and styrenated acrylic polymers, which form visibly homogenous blends with waterborne ethylene acrylic acid copolymers. By "visibly homogenous" it is meant that the blend appears homogenous and uniform to the eye. Typically this means it is homogenous with domains less than about 0.1 micron in size, or if there are domains larger than that size, the index of refraction of the domains is quite close to that of the surrounding material such that little or no discontinuity is visible.

The formation of a visibly homogenous blend is important, as visibly non-homogenous polymer blends will not form a continuously transparent film as is necessary for the representation of retroreflective colors. That these polymers can be satisfactorily blended is surprising as numerous attempts to prepare hot melt blends of ethylene acrylic acid copolymers with other polymers have been unsuccessful. While we do not wish to be bound by this theory, the following hypothesis is believed to explain the difference in behavior between hot melt and aqueous polymers. The solvent-free hot melt system is composed primarily of non-polar ethylene, thus forcing carboxylic acid groups to hydrogen bond to each other, internally. In an aqueous system, water is the primary component and will hydrogen bond to the carboxylate groups, bringing them to the outside of the dispersed polymer particle. The externalized carboxylate groups are then able to associate with other types of polymer particles, either by polar or hydrogen bonding interactions.

Optionally, the copolymeric binder may be crosslinked after application of the color layer onto the retroreflective substrate, or after or during thermal transfer. By crosslinking the carboxyl functionality of the binder with either covalent or ionic crosslinking agents, various physical properties of the color layer can be beneficially influenced. For example, by controlling the amount of crosslinking, the stiffness (i.e., modulus), dimensional stability (in response to changes in temperature and humidity), hot melt adhesive properties (e.g., melting temperature), tensile strength, adhesion, and heat resistance can be improved in some instances.

Useful covalent crosslinking agents typically comprise polyfunctional aziridines, polyfunctional carbodiimides, epoxies, melamines, or mixtures of one or more of these agents. Aziridine crosslinking agents typically tend to lead to crosslinking at relatively low temperatures, e.g., room temperature, and thus are more appropriate for use in conditions when a limited time will elapse between mixing of the crosslinking agent with the composition and application of the composition to the desired surface. Melamine crosslinking agents typically require heating to somewhat higher temperatures and thus are well suited for applications where longer pot life of the mixed composition is desired.

Ionic crosslinking agents are preferably based on metal cations including cations of lithium, sodium, potassium, calcium, barium, titanium, zirconium, iron, aluminum, zinc and other similarly reacting metals. These crosslinking agents are often supplied as aqueous dispersible salts or organometallic complexes. In a salt the metal cation is combined with any of a number of anionic materials such as chloride, nitrate, sulfate, borate, phosphate, acetate, octafloate, stearate, oleate, and methoxy ethoxy carbonate oxide as well as other organic and inorganic anions. Ionic crosslinking agents such as zirconium tend to yield color layers that are still somewhat thermoplastic in character and which exhibit reversible crosslinking. While this property will be desired in some instances, it is believed that such color layers will tend to exhibit somewhat less durability than will similar color layers crosslinked with aziridine or melamine. Illustrative ionic crosslinking agents are based on zirconium and include zirconium hydroxide, zirconium nitrate, zirconium dioxide, zirconium silicate, zirconium sulfate, zirconium carbonate, zirconium acetate, and ammonium zirconium carbonate.

The crosslinking agent (whether ionic or covalent) is typically included at a level of from about 0 to 35 parts per 100 parts (phr) of the copolymeric binder, more preferably 0.05 to 10 phr, and most preferably 0.1 to 4.5 phr.

The color layer (both in thermal transfer articles of the invention and graphic articles of the invention) further comprises one or more color agents such organic or inorganic pigments or dyes, including white, black, and colored materials. If desired, the color agents may be fluorescent. Typically to be useful in a retroreflective application, the color layer should be transparent so the color is similar when viewed under either ordinary diffuse light conditions (e.g., under daylight) or under retroreflective conditions (e.g., at night time when illuminated by vehicle headlights). This typically requires pigments with a relatively narrow absorption band to yield a saturated color and pigment particles with an average refractive index of about 1.5 and an average diameter less than 1 micron in order to minimize light scattering. It will be understood by those skilled in the art that pigment particles outside this range may be used with satisfactory results in some instances. It is also preferred that the particle have an index of refraction that is close to that of the surrounding matrix so as to make any discontinuity less visible. Organic pigments are preferred especially when dispersed to a small particle size so as to minimize light scattering as light passes through the color layer. Dyes also reduce light scattering but generally exhibit a greater tendency to migrate in these materials and therefore are more suitable for applications with shorter lifetimes.

Pigments can be made dispersible in an aqueous system by milling the particles with a water dispersible polymeric binder or by milling and surface treating the particle with suitable polymeric surfactant. Pigments exhibiting the desired properties have been obtained using both types of dispersing systems.

Examples of suitable commercially available waterborne pigment dispersions include HEUCOSPERSE™ III Organic Pigments, believed to contain about 25 weight percent pigment, 25 weight percent styrenated acrylic as binder, and 50 weight percent water, from Heucotech, Ltd.; AQUIS II Organic Pigment, believed to contain about 45 weight percent pigment, 5 weight percent surfactant, and 50 weight percent water, from Heucotech, Ltd.; and SUNSPERSE™ 6000 Organic Pigment Dispersions, believed to typically contain about 45 weight percent pigment, 5 weight percent surfactant, and 50 weight percent water, from Sun Chemical Company.

It has been observed that with surfactant dispersed organic pigments, very high amounts of pigment (e.g., up to the critical pigment volume concentration) can typically be used. In comparison, in some instances such as on polyvinyl butyral substrates, pigments dispersed in styrenated acrylic polymer may result in reduced adhesion of the color layer to the substrate when used at high pigment loading levels.

Pigment in color layer compositions of the invention tend to act as fillers and reduce the cohesive strength of the film as the pigment loading is increased. Increasing pigment loading will tend to decrease the cohesive strength of the layer, making imagewise transfer from a thermal mass transfer element of the invention easier, but also tending to reduce the durability of the transferred image. As is understood by those skilled in the art this effect varies somewhat depending upon the properties of the pigment(s) and other components of the layer. Incorporating too much pigment will tend to yield a resultant image that is too soft and not sufficiently durable. Incorporating too little pigment will tend to yield a color layer that does not exhibit desired strength of color and which may not transfer well, yielding images of poor resolution and quality. Typically the pigment loading is optimized at low levels to achieve a desired balance of color and cohesive strength. In some instances, other resin materials will be incorporated into the composition to adjust the cohesive strength of the layer as desired.

In formulating the coatable, film-forming compositions of the invention, it is important that the pigment particles remain unagglomerated to produce transparent colored images. One method, detailed in the examples, utilizes a ball mill.

Other optional additives which can be incorporated into the color layer include cosolvents, surfactants, defoamers, antioxidants, light stabilizers, e.g., hindered amine light stabilizers, ultraviolet light absorbers, biocides, etc. Surfactants can improve the dispersibility of the color agents in the binder prior to application of the color layer to a substrate, and can improve the coatability of the color layer.

The color layers can be coated, screen printed, or transfer laminated to the cover film layer or to the base sheeting. The order of these manufacturing steps can be varied as desired. For example, the color layer can be coated onto the cover film, and then laminated to the base sheeting, or vice versa. The color layer may be buried in the construction, be between the base sheeting and the cover film, or on the surface of the cover film. Adhesion between adjacent component layers in graphic articles of the invention may be promoted through various oxygenating treatments such as corona discharge and plasma exposure.

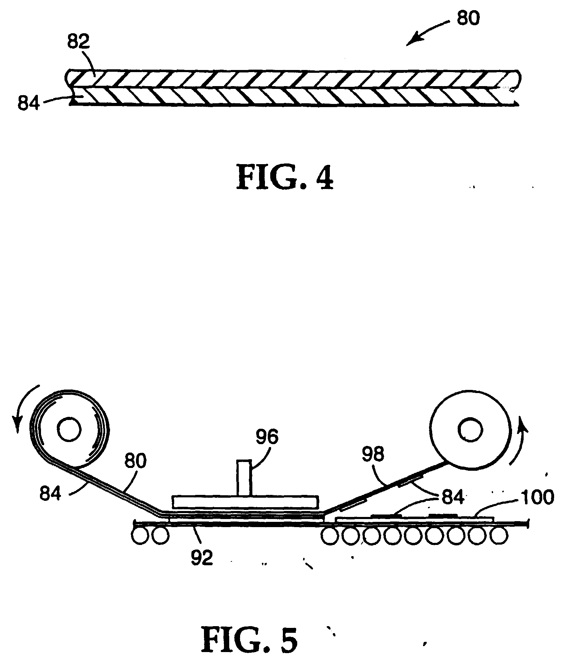

Thermal transfer articles of the present invention comprise a thermally mass transferable color layer comprising a dried version of a coatable composition described herein coated onto a carrier. An illustrative thermal transfer article 80 of the invention is illustrated in Figure 4, consisting essentially of colorant layer 84 coated onto carrier 82, in this embodiment a thin polyethyleneterephthalate (PET) film. The color layer in thermal mass transfer articles of the invention is preferably from about 1 to 10 microns, more preferably from about 2 to about 8 microns, and most preferably from about 3 to about 6 microns thick. In some embodiments, the color layer has a softening or melting temperature between about 50°C and about 140°C, more preferably between about 60°C and about 120°C, and most preferably between about 70°C and about 100°C. Color layers which are too thick may tend to undesirably increase the thermal conductivity of thermal transfer article 80 such that graphic resolution is impaired. Color layers which are too thin may tend to yield graphics which do not exhibit desired durability, hiding power, etc. Color layer 84 can be formed by known techniques, e.g., coating or printing.

In mass thermal transfer articles which employ a polymeric film carrier, the carrier is preferably from about 1 to about 10 microns, more preferably from about 2 to 6 microns, thick.

An optional anti-stick/release coating (not illustrated) is preferably coated onto the side of carrier 82 not having the color layer 84. Anti-stick/release coatings improve handling characteristics of the articles, reduce friction, and prevent the articles from sticking to the print substrate. Suitable anti-stick/release materials include, but are not limited to, silicone materials including poly(lower alkyl)siloxanes such as polydimethylsiloxane and silicone-urea copolymers, and perfluorinated compounds such as perfluoropolyethers.

In some instances an optional release liner (not shown) may be provided over color layer 84 to protect same during handling, etc.

Thermal transfer articles 80 of the invention are typically wound into roll form for shipping and handling and are typically sufficiently flexible to be wound around a 2.5 centimeter (1 inch) diameter core without cracking or breaking. In many instances, foils of the invention will be used to apply graphics to substantially planer surfaces, but if appropriate application equipment is used they can also be used to apply graphics to non-planar substrates.

Suitable carrier materials for thermal transfer articles of the invention may be any flexible material to which a transparent dried colorant composition or opaque white/metallic pigment layer may be adhered. The carrier provides means for handling the thermal transfer article and is preferably sufficiently heat resistant to remain dimensionally stable (i.e., substantially without shrinking, curling, or stretching) when heated to a sufficiently high temperature to achieve adherence of the adherence layer to the desired substrate, e.g., typically at least about 200°C in many instances. Also, the carrier preferably provides desired adhesion to the color layer during shipping and handling as well as desired release properties from the color layer after contact to the substrate and heating. Finally, the carrier and other components of the article preferably exhibit sufficient thermal conductivity such that heat applied in imagewise fashion will heat a suitable region of the color layer such that a graphic pattern of desired resolution is transferred. Suitable carriers may be smooth or rough, transparent or opaque, and continuous (or sheet-like). They are preferably essentially non-porous. By "non-porous" in the description of the invention it is meant that ink, paints and other liquid coloring media or anti-stick compositions will not readily flow through the carrier (e.g., less than 0.05 milliliter per second at 7 torr applied vacuum, preferably less than 0.02 milliliter per second at 7 torr applied vacuum).

Suitable carriers 12 can be selected by those skilled in the art. Illustrative examples of materials that are suitable for use as a carrier include polyesters, especially PET, (e.g., a sheet of MYLAR™ 23A Polyester from E.I. DuPont De Nemours Company), polyethylene naphthalate, polysulfones, polystyrenes, polycarbonates, polyimides, polyamides, cellulose esters, such as cellulose acetate and cellulose butyrate, polyvinyl chlorides and derivatives, aluminum foil, coated papers, and the like. The carrier generally has a thickness of 1 to 500 micrometers, preferably 2 to 100 micrometers, more preferably 3 to 10 micrometers. Particularly preferred carriers are white-filled or transparent PET or opaque paper.

The carrier should be able to withstand the temperature encountered during application. For instance, MYLAR™ polyester films are useful for application temperatures under 200°C with other polyester films being preferred for use under higher temperatures.

Depending upon the characteristics of the carrier and color layer an optional intermediate release control layer may be desired. Suitable release control layers may be selected to provide the desired adhesion and release characteristics between the carrier and color layer and may be readily selected by those skilled in the art. Illustrative examples of typically suitable materials include wax or lacquer. Typically, release control layers will be relatively thin, e.g., about 0.1 micron or so.

Color layer 84 is selected to provide desired adhesion and release from carrier 82, or, if used, the release control layer, and desired adhesion to the intended substrate. Color layer 84 also essentially defines the appearance of the resultant graphic and is formulated to provide the desired color. The color layer is formulated as described above. Color layer 84 may be made up of an essentially homogenous or uniform layer of desired color, or may be segmented with two or more different colors if desired. Color layer 84 and carrier 82 are typically coextensive with one another but the carrier may be substantially continuous and the color layer made up of discontinuous segments if desired.

Coating of the coatable, film-forming thermal mass transfer precursor compositions of the invention onto the carrier may be accomplished by many standard web coating techniques such as imprint gravure, single or double slot extrusion coating, and the like. Imprint gravure is particularly useful for patch-type coatings in which there are interspersed regions of opaque white or metal colorants on a ribbon or sheet.

Thermal transfer articles of the invention are suitable for image production in desktop publishing, direct digital non-critical color proofing, short and long run sign manufacture, and so forth, especially when the graphic image is intended to be weatherable and durable. As used herein the terms durable and durability refer to characteristics such as solvent and chemical resistance, abrasion resistance, bond maintenance of the color layer to the print substrate, and maintenance of color brightness and (for retroreflective substrates) retroreflective brightness. The terms weatherable and weatherability refer to the characteristics such as maintenance of retroreflective brightness, resistant to dirt, resistance to yellowing and the like, all of these in normal use conditions in the outdoors, where sunlight, temperature, and other environmental parameters may affect performance.

Coating of the film-forming thermal mass transfer color layer precursor compositions onto a carrier may be accomplished by many standard web coating techniques such as imprint gravure, single or double slot extrusion coating, wire wound bar coating, and the like. Imprint gravure is particularly useful for patch-type coatings in which there are interspersed regions of opaque white or metal colorants on a ribbon or sheet. Suitable preparation techniques will depend in part on the nature of thermal transfer article which is desired and can be readily selected by those skilled in the art in accordance with the present invention.

Figure 5 illustrates schematically a method of the invention for producing a graphic article of the invention using the thermal transfer articles of the invention. Substrate 92 and thermal transfer article 80 are contacted in thermal transfer printing device 96. Color layer 84 of article 80 contacts substrate 92 in device 96 in a desired pattern. Many thermal transfer printing devices are known and may be used in this process. One such apparatus is that known under the trade designation ZEBRA™ 140, available from ZEBRA Technologies Corp., of Chicago, IL. Thermal transfer article 80 and substrate 92 move simultaneously past a print station comprising a print head that applies heat and contact or pressure to produce a substrate with transferred indicia 100. Spent thermal transfer article 98 may then be wound up on a take-up roll (not shown). For higher performance according to the present invention a crosslinkable color layer is used, and graphic article 100 is treated, e.g., exposed to heat and/or ultraviolet radiation, to induce crosslinking. As noted in the examples, when a covalent crosslinking agent such as melamine is included in the color layer of thermal transfer article, at least some crosslinking can occur in thermal transfer printer, as evidenced by solvent resistance tests.

Printed graphic articles of the invention may pass through a cutting station, such as when vehicle identification tags and the like are to be produced. The person skilled in the retroreflective signage art will recognize other variations of the method, such as image definition provided by a computer, which signals the print head to print the desired indicia.

With alkyl/acrylic thermoplastic binder materials within general formula (I) it is useful to incorporate a separate covalent crosslinking resin, i.e., a resin having moieties reactive with pendant carboxylic acid groups on the alkyl/acrylic polymers within general formula (I). Such a resin is inactive in the composition when formulated and remains inactive until it is desired to covalently crosslink the binder in the color layer. Crosslinker resins that can be thermally activated include melamine-aldehyde resins, urea-aldehyde resins, phenol-aldehyde resins, polyamines, epoxies, and polyalkyleneimines such as polyethyleneimine. Illustrative examples of suitable thermally activated latent crosslinker resins are RESIMENE™ AQ7550 (an aqueous solution containing 78 to 80 parts methylated melamine formaldehyde and 20 to 22 parts water) from Monsanto, St. Louis, Missouri, and CYMEL™ 385, from American Cyanamid. In compositions of the invention cured via thermal energy the compositions typically and preferably comprise from about 1 to about 20 parts by weight (solids basis) of a crosslinker resin. Thermally activatable latent crosslinkers useful in the invention are generally activated at a temperatures ranging from about 80°C to about 150°C, preferably 80°C to about 140°C, more preferably from about 115°C to about 130°C. An advantage of thermal crosslinking is that partial crosslinking can, if desired, take place in the same step as the thermal transfer application of the color layer to the substrate surface.

An advantage of thermal transfer articles of the present invention is that they may be used to form graphic patterns on retroreflective sheetings and other substrates with face comprising olefin-based materials or polyurethane-based coatings. For instance, hot stamping foils of the invention may be used to great advantage to provide graphic patterns on cover films or faces that comprise ethylene/acrylic acid copolymer. If desired, hot stamping foils of the invention may be used to provide graphic patterns on substrates to which no priming treatment has been applied.

Retroreflective graphic articles of the invention may be applied to many structures. The structures may be flat or have compound, contoured three dimensional surfaces. For application to these latter complex surfaces, the graphic article needs to be sufficiently flexible to conform thereto without delaminating or lifting off. The actual requisite flexibility will depend in large part on the nature of the structure surface.

A particularly useful embodiment of graphic articles of the invention is as license plate sheeting, e.g., which can be adhered to a substrate such as a conventional aluminum license plate blank or a clear polycarbonate front face. In many license plate sheetings of the invention, the color layer is disposed between and in direct contact with a cover film and a base layer, e.g., graphic pattern 22 is disposed between cover film 20 and base sheet 12 as illustrated in Figure 1. If desired, the surface of the base layer can comprise polyvinyl butyral or urethane-extended polyester. If desired, the cover film can comprise ethylene acrylic acid copolymer. Retroreflective base sheets made with such materials are currently known but cannot be used with some previously known inks and thermally transferred color layers. Inks and color layers of the present invention provide desired adhesion thereto. An advantage of the present invention is that the inks (and thermally transferable color layers produced therewith) provided herein provide good adhesion to such materials without the use of an intermediate priming layer, i.e., the graphic pattern is in direct contact with both the cover film and the base sheet, especially in instances where the color layer is coextensive with the base sheet and cover film. In some instances, e.g., where the color layer is not coextensive with the cover film and the base sheet but is imagewise, e.g., an alphanumeric legend or other graphic image, it may be desired to use prime treatments such as corona treatment, e.g., using air, carbon dioxide, nitrogen, oxygen, or mixtures, of the base sheet and/or cover film to achieve desired inter-ply adhesion.

In other embodiments, the color layer is left exposed on the outer surface of the retroreflective base sheet, e.g., graphic pattern 24 in Figure 1. In some instances, it may be desired to use a prime material such as one of the NEOREZ Brand Dispersions, a line of aqueous colloidal urethane dispersions from Zeneca Resins.

If desired, the color layer may be applied so as to be coextensive with or cover the retroreflective base sheet to impart desired color across the entire article. Alternatively, the color layer may be applied in imagewise fashion, e.g., to form a legend on a license plate. After application of the ink in desired manner, it is usually dried, e.g., at room temperature or by heating at 150°F to 300°F or more (65°C to 150°C) for 10 seconds to one half hour or more, depending upon the application. In addition to drying the ink, this heating may induce some cross-linking of the ink components and impart greater adhesion to the substrate. Some ink formulations, e.g., containing aziridine, will cross-link while drying at room temperature, typically requiring two or three days to substantially cross-link.

Many new high performance retroreflective sheetings are made with cover films made of such materials as ethylene/acrylic acid copolymer. An advantage of the present invention is that the inks discussed herein can be applied to surfaces comprising such materials as vinyl acid copolymer or urethane-primed vinyl acid copolymer, e.g., ethylene/acrylic acid copolymer, ethylene-methacrylic acid copolymer, and ionically-crosslinked copolymers thereof (for instance SURLYN Polymers from E.I. duPont de Nemours).

An advantage of the present invention is that the inks (and thermally transferable color layers made therefrom) described herein can be used to make retroreflective graphic articles that are substantially free of halogenated polymers such as polyvinyl chloride, thereby eliminating the environmental risks associated with such materials.

If desired, the binder material described herein can be used as a tie layer material within a retroreflective sheeting. For example, continuous layer 22 in Figure 1 or continuous layer 58 in Figure 2, formulated without colorant if desired may be used to more securely bond the constructions together. In the following preferred embodiments of the present invention are summarized:
1. A retroreflective graphic article comprising a retroreflective base sheet, at least one color layer disposed in the optional path of said base sheet, wherein said color layer comprises a color agent and a latent crosslinker in a copolymeric binder, said binder comprising the copolymerization product of an olefinic monomer and a second monomer having a pendant carboxyl group, the binder having the general formula: 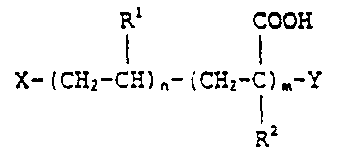 wherein R¹ is independently hydrogen or an alkyl group containing one to eight carbon atoms; R² is (1) H, (2) an alkyl group containing one to six carbon atoms, (3) -CN, (4) an ester group or (5) -R³-COOH wherein R³ is any alkylen group; X is a residue of the olefinic monomer or a residue of the second monomer; Y is a residue of the olefinic monomer or a residue of the second monomer; n is a number selected such that the olefinic monomer provides 70 to 99 mole percent of the binder; and m is a number selected such that the second monomer correspondingly provides 1 to 30 mole percent of the binder; the formula including basic salts thereof.
2. A graphic article of item 1 wherein n is a number selected such that said olefinic monomer provides from 85 to 95 mole percent of the binder and further wherein m is a number selected such that said second monomer correspondingly provides from 15 to 5 mole percent of the binder.
3. A graphic article of item 1 wherein said olefinic monomer is ethylene and said second monomer is either acrylic acid or methacrylic acid.
4. A graphic article of item 3 wherein said copolymeric binder is crosslinked.
5. A graphic article of item 4 wherein said copolymeric binder is crosslinked with a covalent crosslinking agent.
6. A graphic article of item 1 wherein said color layer is applied as a liquid dispersion and dried in situ.
7. A graphic article of item 1 wherein said copolymeric binder is blended or supplemented with a secondary binder.
8. A graphic article of item 7 wherein said secondary binder is an acrylic, styrenated acrylic, or polyurethane polymer.
9. A graphic article of item 1 wherein said color agent is selected from the group consisting of organic pigments, inorganic pigments, metallic flakes, glass flakes, pearlescent materials, and dyes.
10. A graphic article of item 1 wherein said color agent comprises organic pigment particles having an average particle size of less than 1 micron.
11. The graphic article of item 1 wherein said retroreflective base sheet comprises a monolayer of microspheres.
12. The graphic article of item 1 wherein said retroreflective base sheet comprises a layer of cube-corner retroreflective protrusions.
13. The graphic article of item 1 wherein said article is a license plate sheeting.
14. The graphic article of item 13 wherein said color layer is disposed between and in direct contact with a cover film and a base layer.
15. The graphic article of item 14 wherein the surface of said base layer comprises polyvinyl butyral.
16. The graphic article of item 14 wherein the surface of said base layer comprises urethane-extended polyester.
17. The graphic article of item 14 wherein said cover film comprises vinyl acid copolymer.
18. The graphic article of item 13 wherein said color layer was applied in imagewise fashion as an ink to form a legend on a license plate.
19. The graphic article of item 18 wherein the surface to which said ink was applied comprises a vinyl acid copolymer or urethane-primed vinyl acid copolymer.
20. The graphic article of item 1 wherein said color layer and said retroreflective base sheet are substantially free of halogenated polymers.
21. The graphic article of item 1 wherein said retroreflective base sheet is an encapsulated-lens retroreflective sheeting comprising a monolayer of retroreflective elements in a first layer and a cover film having an inner and outer surface, the inner surface of said cover film being sealed to said first layer with a pattern of intersecting bonds.
22. The graphic article of item 21 wherein said color layer is disposed on said outer surface of said cover film.
23. The graphic article of item 21 wherein said color layer is disposed on said inner surface of said cover film.
24. The graphic article of item 21 wherein said cover film comprises a main layer and a secondary layer bonded to the inner surface of said main layer, the inner surface of said secondary layer being sealed to said first layer with said pattern of intersecting bonds, wherein said color layer is disposed between said main layer and said secondary layer.
25. The graphic article of item 1 wherein said color layer is disposed on the outer surface of an optically complete retroreflective base sheet.
26. The graphic article of item 1 wherein said color layer is a tie layer bonding two adjacent polymeric layers together.
27. The article of item 26 wherein one of said adjacent polymeric layers comprises vinyl acid copolymer and a second adjacent polymeric layer comprises a solvent cast thermoplastic urethane.
28. The article of item 26 wherein one of said adjacent polymeric layers comprises one of polyvinyl butyral or urethane-extended poyester and a second adjacent polymeric layer comprises vinyl acid copolymer.
23. A thermal transfer article comprising a carrier and a color layer releasably adhered on said carrier, wherein said color layer comprises a color agent and a latent crosslinker in a copolymeric binder, said binder comprising the copolymerization product of an olefinic monomer and a second monomer having a pendant carboxyl group, the binder having the general formula: 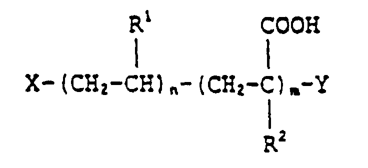 wherein R¹ is independently hydrogen or an alkyl group containing one to eight carbon atoms; R² is H, an alkyl group containing one to six carbon atoms, -CN, an ester group, or -R³-COOH wherein R³ is any alkylen group; X and Y are independently a residue of the olefinic monomer or a residue of the second monomer; n is a number selected such that the olefinic monomer provides 70 to 99 mole percent of the binder; and m is a number selected such that the second monomer correspondingly provides 1 to 30 mole percent of the binder; the formula including basic salts thereof.
30. The article of item 29 wherein n is a number selected such that said olefinic monomer provides from 85 to 95 mole percent of the binder and further wherein m is a number selected such that said second monomer correspondingly provides from 15 to 5 mole percent of the binder.
31. The article of item 29 wherein said olefinic monomer is ethylene and said second monomer is either acrylic acid or methacrylic acid.
32. The article of item 29 wherein said copolymeric binder is blended or supplemented with a secondary binder.
33. The article of item 32 wherein said secondary binder is an acrylic, styrenated acrylic, or polyurethane polymer.
34. The article of item 29 wherein said color agent is selected from the group consisting of organic pigments, inorganic pigments, metallic flakes, glass flakes, pearlescent materials, and dyes.
35. The article of item 29 wherein said color agent comprises organic pigment particles having an average particle size of less than 1 micrometer.
36. The article of item 29 wherein said carrier comprises polyester.
37. The article of item 29 further comprising a release control layer between said carrier and said color layer.
38. The article of item 37 wherein said release control layer comprises wax or lacquer.
39. The article of item 29 wherein said color layer comprises segments of two or more different colors.
40. The article of item 29 wherein said carrier is between about 1 and 500 micrometers.
41. The article of item 29 wherein said carrier is between about 2 and 100 micrometers.
42. The article of item 29 wherein said carrier is between about 3 and 10 micrometers.
43. The article of item 29 wherein said color layer is between about 1 and about 10 microns thick.
44. The article of item 29 wherein said color layer is between about 2 and about 8 microns thick.
45. The article of item 29 wherein said color layer is between about 3 and about 6 microns thick.
46. The article of item 29 wherein said color layer and said carrier are substantially free of halogenated polymers.
47. A method of making a retroreflective graphic article, the method comprising the steps of:
   (a) selecting a thermal transfer article in accordance with item 29;
   (b) selecting a retroreflective substrate; and
   (c) contacting said color layer of said thermal transfer article with said retroreflective sheeting under sufficient heat and pressure to transfer at least a portion of said color layer to the retroreflective sheeting.
48. The method of item 47 wherein said face of said retroreflective sheeting comprises an olefin-based material or a polyurethane-based coating.
49. The method of item 48 wherein said face comprises ethylene/acrylic acid copolymer.
50. The method of item 47 wherein said color layer of said thermal transfer article is contacted directly to the face of said retroreflective sheeting without applying any priming treatment.
51. A retroreflective graphic article comprising a face layer made of an olefin-based material or a polyurethane-based coating with a graphic layer adhered to said face layer, said graphic layer comprising a color layer as defined in item 29.
52. The article of item 51 wherein said article is a motor vehicle license plate, retroreflective sticker, or retroreflective emblem.

### Examples

The invention will be further explained by the following illustrative examples which are intended to be non-limiting. Unless otherwise indicated, all amounts are expressed in parts by weight.

### Test Methods

The following test methods may be used to evaluate the utility of retroreflective graphic articles of the invention in certain outdoor environments, especially in conjunction with motor vehicles. A graphic article that fails to pass every test may still be suitable for outdoor use, depending upon the requirements for a specific application. Unless otherwise noted below, a graphic article is considered to have passed a particular test if it shows no objectionable effect, e.g., including surface deterioration, gloss or color change, adhesion loss, and cracking or crazing.

In each test, the graphic article was bonded to an aluminum panel with a pressure-sensitive adhesive, using care to squeeze out all of the air between the article and the panel. A 2 inch (5 centimeter) hand roller was used to facilitate such smooth lamination. After lamination of the graphic article thereto, panels were allowed to age for 24 hours at room temperature (65°F to 75°F, 18°C to 24°C) prior to analysis, which was also at room temperature.

### Surface Adhesion

Adhesion of external color layers to retroreflective substrates was evaluated in a procedure analogous to ASTM 3359. A first series of parallel lines about 1 to 2 millimeters apart were scored in the surface of the graphic article, extending through the thickness of the color layer to or into the underlying layer, and a second series of similar parallel lines was then scored perpendicular to the first series. 3M Brand Olive Drab Cloth Tape No. 390 was then firmly adhered to the cross hatched area and then removed in a single, rapid continuous motion at about 90° to the panel. The panel was then examined and the percent of remaining color layer determined to assess adhesion. Samples were rated from 0B to 5B as specified in ASTM 3359, according to the amount of ink removed. A rating of 5B is preferred.

### Interlayer Adhesion

Adhesion of buried color layers in the inventive retroreflective graphic articles was evaluated by using a new single edge razor blade at about a 20° to 30° angle to the sample to slice away a 0.5 to 1.0 centimeter portion of the overlying cover layer and cut through the color layer and into but not through the underlying base sheet. The now separated top layer was peeled back from the color layer at about 150° to 180°. The top layer was further peeled until it peeled from the color layer (or the color layer peeled free from the underlying base sheet) until one side of the panel was peeled along its entire length. If a peel was not successfully completed after the razor blade slice then a new razor blade was used and another attempt made. This sequence was iterated up to 10 tries if necessary. A piece of filament tape was adhered to the peeling top layer and looped over and secured by one jaw of an Instron tester, and the article secured by the opposing jaw of the Instron tester. The Instron was then set at a jaw separation speed of 12.5 centimeters/minute (5 inches/minute) and the average peel force measured. If the peel could not be started during preparation of the sample, peel test is denoted as "CP" for "can't peel". If the film broke during the Instron measurement before a representative force could be recorded, then a new peel was attempted as described above. At no time was peel recorded as CP until at least 10 attempts using new razor blades to start the peel and measure the force had been used. Preferably the peel force is at least 2 pounds/inch-width (3.5 Newtons/centimeter-width), more preferably at least 4 pounds/inch-width (7 Newtons/centimeter-width).

### Water Soak

Panels were immersed in water at 25 ± 5°C for 24 hours, then removed and rubbed vigorously with a paper towel. The number of days of immersion after which delamination between the color layer and underlying layer of a retroreflective article was noted. The test is performed for 1, 2, 4, 7, and 10 days of immersion until delamination is noted. Preferably no delamination is noted until at least 7, more preferably at least 10, days.

### Abrasion Resistance

Abrasion resistance was evaluated using the "falling sand" test described in ASTM D968. Two liters of sand are dropped onto samples, the color layers examined, and the process repeated until the color layer had worn through to the retroreflective substrate. The number of liters of sand, up to a maximum of 12, was noted. Preferably the color layer will withstand abrasion by at least 6, more preferably 12 or more liters of sand.

### Solvent Resistance

Resistance to indicated solvents was evaluated by moistening a paper towel with the indicated solvent and rubbing over the color layer with successive double rubs, stopping (recording the number of double rubs) when the color layer had been removed from the surface or when 100 double rubs was reached. A value of 100 means that little or no color layer had been removed from the surface and is considered a pass.

### Embossibility

Embossibility was evaluated by embossing omega (Ω) characters of varying depths using an Utsch die press. The omegas were 7.7 centimeters high, 3.1 centimeters across, and had a stroke width of 0.7 centimeters. They had depths of 1.75, 2.0, 2.25, 2.50, and 2.75 centimeters, respectively. The maximum depth at which the color layer did not crack was noted.

### Daytime/Nighttime Color Consistency

The color under diffuse light conditions and retroreflective conditions was evaluated to assess whether daytime and nighttime color appearance was comparable.

### Gloss

Gloss of the surface of the color layer was measured according to ASTM D 523 at a 60° degree gloss meter geometry. Gloss is preferably at least 60 and more preferably at least 80.

### Examples 2,3 and 5 and Reference Examples 1 and 4

In Examples 2,3 and 5 and Reference Examples 1 and 4, the following ink formulations were used to form color layers of the invention (amounts in weight percent). The percent solids, volatile organic content ("VOC"), and pigment-to-binder ratio of each formulation is also shown:

| Formulation | | | | | Component |
|---|---|---|---|---|---|
| 1* | 2 | 3 | 4* | 5 | |
| 80 | 70 | 76 | 50 | 28 | ADCOTE™ 50T4983 |
| 0 | 0 | 0 | 0 | 28 | NEOCRYL™ A612 |
| 0 | 10 | 0 | 0 | 0 | AQ™ 7550 |
| 20 | 20 | 20 | 20 | 20 | HEUCOSPERSE™ III Blue |
| 0 | 0 | 4 | 0 | 0 | CX-100 |
| 0 | 0 | 0 | 30 | 0 | Isopropanol |
| 0 | 0 | 0 | 0 | 2 | Texanol |
| 0 | 0 | 0 | 0 | 0.2 | DMAMP-80 |
| 0 | 0 | 0 | 0 | 9.8 | Butyl carbitol |
| 0 | 0 | 0 | 0 | 2 | SURFYNOL™ 104PA |
| 30 | 32.5 | 33 | 23 | 31 | Percent Solids |
| 0 | 0 | 0 | 570 | 370 | VOC |
| 0.17 | 0.15 | 0.15 | 0.25 | 0.24 | Pigment-To-Binder Ratio |

| | | | | | |
|---|---|---|---|---|---|
| *Reference | | | | | |

NEOCRYL™ A612 is a water-borne acrylic polymer dispersion from Zoneca Resins, Inc. AQ™ 7550 is a water-borne resin from Monsanto. CX-100 is a polyfunctional aziridine oligomer from Zeneca Resins, Inc. TEXANOL™ is 2,2,4-trimethyl-1,3-pentanediol monoisobutyrate from Eastman Chemical Products Company. DMAMP-80 is dimethyl aminomethyl propanol from Angus Chemical Company. SURFYNOL™ 104PA is acetylenic diol in isopropanol from Air Products and Chemicals Company.

In each of Examples 1-3, the base sheet was like the retroreflective sheet described as item 28 in Figure 2 and Example 1 of U.S. Patent No. 4,664,966 (Bailey et al.) In Reference Example 4, the base sheet comprised a monolayer of microspheres in a polyvinyl butyral binder layer like that shown as item 18 in Figure 2 of U.S. Patent No. 4,664,966. In Example 5, the base sheet was a retroreflective sheet comprising a monolayer of microspheres in a urethane-extended polyester binder layer.

In Reference Example 1, color layer formulation 1, which contained no crosslinker, was coated onto the base sheet to a nominal wet film thickness of 0.5 mil (12 microns) using a wire wound bar and immediately placed in an oven at 120°C (250°F) for 15 minutes. In Example 2, color layer formulation 2, which contained a melamine crosslinking agent, was coated and the graphic article prepared in the same way. In Example 3, formulation 3, which contained an aziridine crosslinking agent, was coated in the same way and the graphic article was dried under ambient conditions (65°F to 75°F, 18°C to 24°C) for 24 hours rather than in an oven.

In Reference Example 4, formulation 4 was gravure coated onto the entire surface of the base sheet at a line speed of 100 feet/minute (30.5 meters/minute) and dried in an oven at 100°F (38°C) for about 20 seconds. A 2 mil (50 micron) thick film of ethylene/acrylic acid copolymer was then laminated over the color layer to form a cover film as described in Example 1 of U.S. Patent No. 4,664,966 by passing through a nip roller at a pressure of 19 kilograms/centimeter-width with a hot can temperature of 250°F (120°C) at a line speed of 60 feet/minute (18.3 meters/minute). Alternatively, the ink could have been coated onto the cover film and dried, both surfaces corona treated, and that side of the cover film laminated to the base sheet if desired.

In Example 5, formulation 5 was screen printed onto the entire retroreflective base sheet using a 157 mesh screen and the color layer then dried at 150°F (65°C) for about 5 minutes and then a 2 mil (50 micron) thick film of ethylene/acrylic acid copolymer was then laminated over the color layer by passing through a nip roller at a pressure of 19 kilograms/centimeter-width with a hot can temperature of 250°F (120°C) at a line speed of 40 feet/minute (12.2 meters/minute).

In Comparative Examples A-D, retroreflective base sheets like those used in Examples 1-3 were used. The following materials were used to form color layers: in Comparative Example A, KIWALITE™ KF Series Brown Roll Coating Ink, a vinyl thermoplastic; in Comparative Example B, RHENANIA™ K-11703 Black Roller Coater Paint, a vinyl thermoplastic; in Comparative Example C, 3M Brand 4800 Series Blue Roll Coat Paste, an alkyd thermoset; and in Comparative Example D, TOSHIBA Brand Waterborne Rollcoat Black Ink H₂O×RFX, an acrylic thermoplastic.

In Comparative Example E, a retroreflective graphic article was made as in Example 4 except a solvent-borne vinyl gravure ink was used to form the color layer.

The retroreflective graphic articles of Examples 1-3 and comparative Examples A-D were subjected to the indicated tests with the following results being obtained:

| | Example | | | Comparative Example | | | |
|---|---|---|---|---|---|---|---|
| Test | 1* | 2 | 3 | C | D | B | A |
| Surface Adhesion | 5B | 5B | 5B | 5B | 5B | 1B | 0B |
| Water Soak | 10+ | 10+ | 10+ | 10+ | 1 | 4+ | 4+ |
| Abrasion Resistance | 4 | 8 | 12+ | 12+ | 12 | 8 | 8 |
| Gloss | 83 | 83 | 83 | 61 | 54 | 25 | 49 |
| Color Consistency | Good | Good | Good | Good | NA | NA | NA |

| **Solvent Resistance** | | | | | | | |
|---|---|---|---|---|---|---|---|
| Gasoline | 50 | 100+ | 100+ | 100+ | 100+ | 100+ | 100+ |
| Isopropanol | 15 | 100+ | 100+ | 100+ | 40 | 100+ | 100+ |
| Methyl ethyl ketone | 20 | 100+ | 100+ | 100+ | 7 | 2 | 2 |

| | | | | | | | |
|---|---|---|---|---|---|---|---|
| *Reference | | | | | | | |

The retroreflective graphic articles of Reference Example 4 and Example 5 and Comparative Example E were subjected to the indicated tests with the following results being obtained:

| | Example | | Comparative |
|---|---|---|---|
| Test | 4* | 5 | E |
| Interlayer Adhesion (pounds/inch-width) | 2.4 | 3.4 | 0.7 |
| Embossibility | Pass | Pass | Pass |
| Color Consistency | Good | Good | Good |

| | | | |
|---|---|---|---|
| *Reference | | | |

### Reference Example 6

An ink was prepared by mixing 95 grams of a waterborne EAA dispersion known under the trade designation ADCOTE™ 50T4990, from Morton International, and 5 grams pigment known under the trade designation AQUALOR BLACK™ for 5 minutes with a propeller mixer. The ink was coated onto a PET film carrier with a wire wound bar to give a wet film thickness of about 0.5 mil (about 13 micrometers). The ink was then dried at room temperature (about 20°C), thus yielding a thermal transfer article of the invention.

One day later, the thermal transfer article was loaded into an Utsch hot stamp machine operating at 200°C, 5 to 6 feet/minute, rubber roll hardness 65 to 80 shore, and the color layer transferred imagewise onto the embossed or raised areas of a license plate with a piece of an enclosed lens retroreflective sheeting having an extruded EAA cover film as described in U.S. Patent No. 4,664,966.

The transferred color layer had good adhesion to the retroreflective sheeting, as demonstrated by the surface adhesion test. Resistance to methyl ethyl ketone (MEK) was poor, as a paper towel wet with MEK wiped the color layer off of the retroreflective sheeting.

### Example 7

An ink and thermal transfer article were prepared as in Example 6 except that 10 grams melamine (known under the trade designation CYMEL™ 385, from American Cyanamid) was added to the ink before stirring. Thirty days after the thermal transfer article was prepared the color layer of the thermal transfer article was transferred and tested in the same manner as in Example 6.

The transferred color layer again exhibited good adhesion to the EAA cover film of the retroreflective sheeting, as demonstrated by the surface adhesion test. Resistance to MEK was improved over the sample of Example 6, as a paper towel wet with MEK required 15 double rubs to remove the ink. The retroreflective sheeting having the transferred color layer was placed into an oven at 250°F (121°C) for 10 minutes, and then again subjected to the MEK double rub test. After 100 double rubs, the color remained on the retroreflective sheeting.

Reference Example 6 and Example 7 demonstrate the surprising result that thermal transfer articles of these examples have shelf stability, since it would have been expected that the color layer would not have remained thermally transferable. Further, the color layer of the thermal transfer article was crosslinkable after thermal transfer, demonstrated by the improved solvent resistance of the transferred color layer after a post-transfer cure. Also, the color layer may be crosslinked in the thermal transfer step, indicated by the slightly improved solvent resistance of the transferred color layer of the high performance article before oven exposure, compared with the solvent resistance of the thermal transfer article of Reference Example 6.

### Reference Example 8

An ink was prepared by diluting 4 grams of AQUIS Brand BW 3571 blue pigment (aqueous dispersion of pigment blue 15:3 from Heucotech) first with 6 grams of water and then with 15 grams of ethanol. While continuously stirring 3 grams of A612 (acrylic dispersion from Zeneca resins) and 4 grams of ADCOTE 50T4983 (ethylene acrylic acid copolymer dispersion) were added to the dilution. The mixture was coated onto a 4.5 micrometer thick polyester film with a #20 wire bar to produce a 3.3 thick color layer.

The color layer was thermally mass transferred to a 50 micron film of ethylene acrylic acid copolymer using a color proofing machine (RAINBOW DESKTOP COLOR PROOFER).

The transferred color layer had good adhesion to the film as demonstrated by the surface adhesion test.

## Claims

1. A retroreflective graphic article comprising a retroreflective base sheet, at least one color layer disposed in the optical path of said base sheet, wherein said color layer comprises a color agent and a latent crosslinker in a copolymeric binder, said binder comprising the copolymerization product of an olefinic monomer and a second monomer having a pendant carboxyl group, the binder having the general formula: 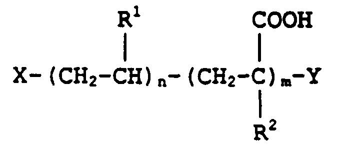 wherein R¹ is independently hydrogen or an alkyl group containing one to eight carbon atoms; R² is (1) H, (2) an alkyl group containing one to six carbon atoms, (3) -CN, (4) an ester group or (5) -R³-COOH wherein R³ is any alkylen group; X is a residue of the olefinic monomer or a residue of the second monomer; Y is a residue of the olefinic monomer or a residue of the second monomer; n is a number selected such that the olefinic monomer provides 70 to 99 mole percent of the binder; and m is a number selected such that the second monomer correspondingly provides 1 to 30 mole percent of the binder; the formula including basic salts thereof.

2. A graphic article of claim 1 wherein said olefinic monomer is ethylene and said second monomer is either acrylic acid or methacrylic acid and said copolymeric binder is crosslinked.

3. A graphic article of claim 1 wherein said color layer is applied as a liquid dispersion and dried in situ.

4. The graphic article of claim 1 wherein said article is a license plate sheeting.

5. The graphic article of claim 4 wherein said color layer is disposed between and in direct contact with a cover film and a base layer.

6. The graphic article of claim 5 further characterized in at least one of the following:
a) the surface of said base layer comprises polyvinyl butyral; or
b) the surface of said base layer comprises urethane-extended polyester; or
c) said cover film comprises vinyl acid copolymer.

7. The graphic article of claim 4 wherein said color layer was applied in imagewise fashion as an ink to form a legend on a license plate and the surface to which said ink was applied comprises a vinyl acid copolymer or urethane-primed vinyl acid copolymer.

8. The graphic article of claim 1 wherein said color layer and said retroreflective base sheet are substantially free of halogenated polymers.

9. A thermal transfer article comprising a carrier and a color layer releasably adhered on said carrier, wherein said color layer comprises a color agent and a latent crosslinker in a copolymeric binder, said binder comprising the copolymerization product of an olefinic monomer and a second monomer having a pendant carboxyl group, the binder having the general formula: 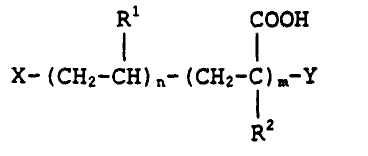 wherein R¹ is independently hydrogen or an alkyl group containing one to eight carbon atoms; R² is H, an alkyl group containing one to six carbon atoms, -CN, an ester group, or -R³-COOH wherein R³ is any alkylen group; X and Y are independently a residue of the olefinic monomer or a residue of the second monomer; n is a number selected such that the olefinic monomer provides 70 to 99 mole percent of the binder; and m is a number selected such that the second monomer correspondingly provides 1 to 30 mole percent of the binder; the formula including basic salts thereof.

10. The article of either claim 1 or 9 wherein n is a number selected such that said olefinic monomer provides from 85 to 95 mole percent of the binder and further wherein m is a number selected such that said second monomer correspondingly provides from 15 to 5 mole percent of the binder.

11. The article of either claim 1 or 9 wherein said olefinic monomer is ethylene and said second monomer is either acrylic acid or methacrylic acid.

12. The article of either claim 1 or 9 wherein said copolymeric binder is blended or supplemented with a secondary binder.

13. The article of claim 12 wherein said secondary binder is an acrylic, styrenated acrylic, or polyurethane polymer.

14. The article of either claim 1 or 9 wherein said color agent is selected from the group consisting of organic pigments, inorganic pigments, metallic flakes, glass flakes, pearlescent materials, and dyes.

15. The article of either claim 1 or 9 wherein said color agent comprises organic pigment particles having an average particle size of less than 1 micrometer.

16. The article of either claim 1 or 9 wherein said color layer comprises segments of two or more different colors.

17. The article of either claim 1 or 9 further characterized in at least one of the following:
a) said color layer is between about 1 and about 10 microns thick; or
b) said color layer is between about 2 and about 8 microns thick; or
c) said color layer is between about 3 and about 6 microns thick.

18. The article of claim 9 wherein said color layer and said carrier are substantially free of halogenated polymers.

19. A method of making a retroreflective graphic article, the method comprising the steps of:
a) selecting a thermal transfer article in accordance with claim 9;
b) selecting a retroreflective substrate; and
c) contacting said color layer of said thermal transfer article with said retroreflective sheeting under sufficient heat and pressure to transfer at least a portion of said color layer to the retroreflective sheeting.

20. The method of claim 19 wherein said face of said retroreflective sheeting comprises an olefin-based material or a polyurethane-based coating.

21. The method of claim 19 wherein said color layer of said thermal transfer article is contacted directly to the face of said retroreflective sheeting without applying any priming treatment.

## Patentansprüche

1. Retroreflektiver graphischer Gegenstand, umfassend eine retroreflektive Basisfolie, mindestens eine Farbschicht, die im optischen Weg der Basisfolie liegt, wobei die Farbschicht ein Farbmittel und ein latentes Vernetzungsmittel in einem copolymeren Bindermittel umfaßt, wobei das Bindemittel das Copolymerisationsprodukt eines Olefinmonomers und eines zweiten Monomers mit einer Carboxylgruppe als Seitengruppe umfaßt, wobei das Bindemittel die allgemeine Formel hat: 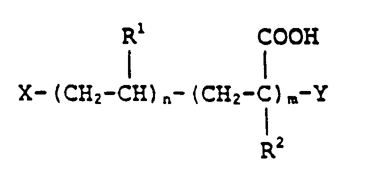 wobei R¹ unabhängig ein Wasserstoffatom oder ein Alkylrest mit einem bis acht Kohlenstoffatomen ist: R² (1) H, (2) ein Alkylrest mit einem bis sechs Kohlenstoffatomen, (3) -CN, (4) ein Esterrest oder (5) -R³-COOH ist, wobei R³ ein Alkylenrest ist; X ein Rest des Olefinmonomers oder ein Rest des zweiten Monomers ist: Y ein Rest des Olefinmonomers oder ein Rest des zweiten Monomers ist; n eine Zahl ist, die so gewählt ist, daß das Olefinmonomer 70 bis 99 Mol-% des Bindemittels stellt; und m eine Zahl ist, die so gewählt ist, daß das zweite Monomer entsprechend 1 bis 30 Mol-% des Bindemittels stellt; wobei die Formel basische Salze davon umfaßt.

2. Graphischer Gegenstand nach Anspruch 1, wobei das Olefinmonomer Ethylen ist und das zweite Monomer entweder Acrylsäure oder Methacrylsäure ist und das copolymere Bindemittel vernetzt ist.

3. Graphischer Gegenstand nach Anspruch 1, wobei die Farbschicht als flüssige Dispersion aufgetragen und in situ getrocknet wird.

4. Graphischer Gegenstand nach Anspruch 1, wobei der Gegenstand ein Folienmaterial für ein Nummernschild ist.

5. Graphischer Gegenstand nach Anspruch 4, wobei sich die Farbschicht zwischen und in direktem Kontakt mit einer Abdeckfolie und einer Basisschicht befindet.

6. Graphischer Gegenstand nach Anspruch 5, außerdem durch mindestens einen der folgenden Punkte gekennzeichnet:
a) die Oberfläche der Basisschicht umfaßt Polyvinylbutyral; oder
b) die Oberfläche der Basisschicht umfaßt Urethan-gestreckten Polyester; oder
c) die Abdeckfolie umfaßt Vinylsäurecopolymer.

7. Graphischer Gegenstand nach Anspruch 4, wobei die Farbschicht in bildweise als Farbe aufgetragen wurde, um eine Beschriftung auf einem Nummernschild herzustellen, und wobei die Oberfläche, auf die die Farbe aufgetragen wurde, ein Vinylsäurecopolymer oder ein Urethangrundiertes Vinylsäurecopolymer umfaßt.

8. Graphischer Gegenstand nach Anspruch 1, wobei die Farbschicht und die retroreflektive Basisfolie im wesentlichen frei von halogenierten Polymeren sind.

9. Gegenstand für die thermische Übertragung, umfassend einen Träger und eine Farbschicht, die trennbar am Träger befestigt ist, wobei die Farbschicht ein Farbmittel und ein latentes Vernetzungsmittel in einem copolymeren Bindemittel umfaßt, wobei das Bindemittel das Copolymerisationsprodukt eines Olefinmonomers und eines zweiten Monomers mit einer Carboxylgruppe als Seitengruppe umfaßt, wobei das Bindemittel die allgemeine Formel hat: 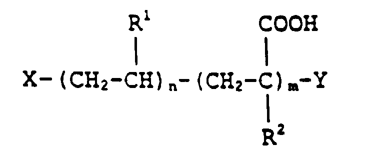 wobei R¹ unabhängig ein Wasserstoffatom oder ein Alkylrest mit einem bis acht Kohlenstoffatomen ist: R² H, ein Alkylrest mit einem bis sechs Kohlenstoffatomen, -CN, ein Esterrest oder -R³-COOH ist, wobei R³ ein Alkylenrest ist; X und Y unabhängig voneinander ein Rest des Olefinmonomers oder ein Rest des zweiten Monomers sind; n eine Zahl ist, die so gewählt ist, daß das Olefinmonomer 70 bis 99 Mol-% des Bindemittels stellt; und m eine Zahl ist, die so gewählt ist, daß das zweite Monomer entsprechend 1 bis 30 Mol-% des Bindemittels stellt; wobei die Formel basische Salze davon umfaßt.

10. Gegenstand nach Anspruch 1 oder 9, wobei n eine Zahl ist, die so gewählt ist, daß das Olefinmonomer 85 bis 95 Mol-% des Bindemittels stellt und wobei außerdem m eine Zahl ist, die so gewählt ist, daß das zweite Monomer entsprechend 15 bis 5 Mol-% des Bindemittels stellt.

11. Gegenstand nach Anspruch 1 oder 9, wobei das Olefinmonomer Ethylen ist und das zweite Monomer entweder Acrylsäure oder Methacrylsäure ist.

12. Gegenstand nach Anspruch 1 oder 9, wobei das copolymere Bindemittel mit einem sekundären Bindemittel gemischt oder ergänzt wird.

13. Gegenstand nach Anspruch 12, wobei das sekundäre Bindemittel ein Acryl-, styrolisiertes Acryl- oder Polyurethanpolymer ist.

14. Gegenstand nach Anspruch 1 oder 9, wobei das Farbmittel aus organischen Pigmenten, anorganischen Pigmenten, Metallflocken, Glasflocken, perlmutterfarbigen Materialien und Farbstoffen ausgewählt ist.

15. Gegenstand nach Anspruch 1 oder 9, wobei das Farbmittel organische Pigmentteilchen umfaßt, die eine mittlere Teilchengröße von weniger als 1 Mikrometer aufweisen.

16. Gegenstand nach Anspruch 1 oder 9, wobei die Farbschicht Segmente aus zwei oder mehreren verschiedenen Farben umfaßt.

17. Gegenstand nach Anspruch 1 oder 9, außerdem durch mindestens einen der folgenden Punkte gekennzeichnet:
a) die Farbschicht ist zwischen etwa 1 und etwa 10 Mikron dick; oder
b) die Farbschicht ist zwischen etwa 2 und etwa 8 Mikron dick; oder
c) die Farbschicht ist zwischen etwa 3 und etwa 6 Mikron dick.

18. Gegenstand nach Anspruch 9, wobei die Farbschicht und der Träger im wesentlichen frei von halogenierten Polymeren sind.

19. Verfahren zur Herstellung eines retroreflektiven graphischen Gegenstands, wobei das Verfahren die Schritte umfaßt:
(a) Auswahl eines Gegenstands für die thermische Übertragung gemäß Anspruch 9;
(b) Auswahl eines retroreflektiven Substrats; und
(c) die Farbschicht des Gegenstands für die thermische Übertragung mit dem retroreflektiven Folienmaterial unter ausreichender Wärme und Druck in Kontakt bringen, um mindestens einen Teil der Farbschicht auf das retroreflektive Folienmaterial zu übertragen.

20. Verfahren nach Anspruch 19, wobei die Fläche des retroreflektiven Folienmaterials ein Material auf Olefinbasis oder eine Beschichtung auf Polyurethanbasis umfaßt.

21. Verfahren nach Anspruch 19, wobei die Farbschicht des Gegenstands für die thermische Übertragung direkt mit der Fläche des retroreflektiven Folienmaterials in Kontakt gebracht wird, ohne eine Grundierungsbehandlung aufzutragen.

## Revendications

1. Un article graphique rétroréfléchissant comportant une feuille de base rétroréfléchissante, au moins une couche de couleur disposée sur le trajet optique de ladite feuille de base, dans lequel ladite couche de couleur comporte un agent colorant et un agent de réticulation latent, dans un agent de liaison copolymère, cet agent de liaison comportant le produit de copolymérisation d'un monomère oléfinique et d'un second monomère ayant un groupe carboxyle pendant, l'agent de liaison ayant la formule générale : 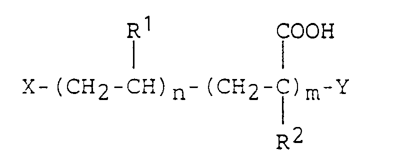 dans laquelle R¹ est indépendamment H ou un groupe alkyle renfermant de 1 à 8 atomes de carbone ; R² est (1) H, (2) un groupe alkyle renfermant de 1 à 6 atomes de carbone, (3) -CN, (4) un groupe ester, ou (5) -R³-COOH, où R³ est un groupe alkylène quelconque ; X est un résidu du monomère oléfinique ou bien un résidu du second monomère ; Y est un résidu du monomère oléfinique ou bien un résidu du second monomère ; n est un nombre choisi de façon que le monomère oléfinique fournisse de 70 à 99 % molaire de l'agent liant ; et m est un nombre choisi de façon que le second monomère procure, de façon correspondante, de 1 à 30 % molaire de l'agent liant, la formule englobant les sels basiques de l'agent liant.

2. Un article graphique de la revendication 1, dans lequel ledit monomère oléfinique est de l'éthylène et ledit second monomère est de l'acide acrylique ou de l'acide méthacrylique, tandis que ledit agent liant copolymère est réticulé.

3. Un article graphique de la revendication 1, dans lequel la couche de couleur est appliquée sous la forme d'une dispersion liquide puis séchée in situ.

4. L'article graphique de la revendication 1, dans lequel ledit article est un article en feuilles du type plaque d'immatriculation.

5. L'article graphique de la revendication 4, dans lequel ladite couche de couleur est disposée entre un film de recouvrement et une couche de base, en contact direct avec celles-ci.

6. L'article graphique de la revendication 5, caractérisé en outre par au moins un des points suivants :
a) la surface de ladite couche de base comporte du polyvinyl butyral; ou
b) la surface de ladite couche de base comporte un polyester prolongé par de l'uréthane ; ou
c) ledit film de recouvrement comporte un copolymère d'acide vinylique.

7. L'article graphique de la revendication 4, dans lequel ladite couche de couleur est appliquée à la façon d'une image sous la forme d'une encre pour former une légende sur une plaque d'immatriculation et la surface sur laquelle ladite encre est appliquée, comporte un copolymère d'acide vinylique ou un copolymère d'acide vinylique apprété par de l'uréthane.

8. L'article graphique de la revendication 1, dans lequel ladite couche de couleur et ladite feuille de base rétroréfléchissante sont essentiellement dépourvues de polymères halogénés.

9. Un article de transfert thermique comportant un support et une couche de couleur fixés par adhérence, de façon amovible, sur ledit support, dans lequel ladite couche de couleur comporte un agent colorant et un agent de réticulation latent, dans un agent de liaison copolymère, cet agent de liaison comportant le produit de copolymérisation d'un monomère oléfinique et d'un second monomère ayant un groupe carboxyle pendant, l'agent de liaison ayant la formule générale : 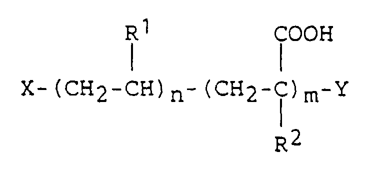 dans laquelle R¹ est indépendamment H ou un groupe alkyle renfermant de 1 à 8 atomes de carbone ; R² est H, un groupe alkyle renfermant de 1 à 6 atomes de carbone, -CN, un groupe ester, ou -R³-COOH, où R³ est un groupe alkylène quelconque ; X et Y représentent indépendamment un résidu du monomère oléfinique ou bien un résidu du second monomère ; n est un nombre choisi de façon que le monomère oléfinique fournisse de 70 à 99 % molaire de l'agent liant ; et m est un nombre choisi de façon que le second monomère procure, de façon correspondante, de 1 à 30 % molaire de l'agent liant, la formule englobant les sels basiques de l'agent liant.

10. L'article de l'une quelconque des revendications 1 ou 9, dans lequel n est un nombre choisi de façon que ledit monomère oléfinique constitue de 85 à 95 % molaire de l'agent liant et, en outre, dans lequel m est un nombre choisi de façon que ledit second monomère constitue de façon correspondante, de 15 à 5 % molaire de l'agent liant.

11. L'article de l'une quelconque des revendications 1 à 9, dans lequel ledit monomère oléfinique est de l'éthylène et ledit second monomère est de l'acide acrylique ou bien de l'acide méthacrylique.

12. L'article de l'une quelconque des revendications 1 ou 9, dans lequel ledit agent liant copolymère est mélangé avec un agent liant secondaire, ou bien vient en complément de celui-ci.

13. L'article de la revendication 12, dans lequel ledit agent liant secondaire est un polymère acrylique, acrylique styréné ou de polyuréthane.

14. L'article de l'une quelconque des revendications 1 ou 9, dans lequel ledit agent colorant est choisi dans le groupe constitué des pigments organiques, des pigments inorganiques, des copeaux métalliques, des copeaux de verre, des matériaux perlescents et des colorants.

15. L'article de l'une quelconque des revendications 1 ou 9, dans lequel ledit agent colorant comporte des particules de pigment organique, présentant une dimension moyenne des particules inférieure à 1 micron.

16. L'article de l'une quelconque des revendications 1 ou 9, dans lequel la couche de couleur comporte des segments de deux ou de plus de deux couleurs différentes.

17. L'article de l'une quelconque des revendications 1 ou 9, caractérisé en outre par un au moins des points suivants :
a) ladite couche de couleur présente une épaisseur entre environ 1 et environ 10 microns ; ou
b) ladite couche de couleur présente une épaisseur entre environ 2 et environ 8 microns ; ou
c) ladite couche de couleur présente une épaisseur entre environ 3 et environ 6 microns.

18. L'article de la revendication 9, dans lequel ladite couche de couleur et ledit support sont essentiellement dépourvus de polymères halogénés.

19. Un procédé pour réaliser un article graphique rétroréfléchissant, ce procédé comportant les étapes de :
(a) choisir l'article de transfert thermique selon la revendication 9 ;
(b) choisir un substrat rétroréfléchissant ; et
(c) mettre en contact ladite couche de couleur dudit article de transfert thermique avec ledit article en feuilles rétroréfléchissant sous suffisamment de chaleur et de pression pour transférer au moins une partie de ladite couche de couleur sur l'article en feuilles rétroréfléchissant.

20. Le procédé de la revendication 19, dans lequel ladite face dudit article en couches rétroréfléchissant, comporte un matériau à base d'oléfines ou un revêtement à base de polyuréthane.

21. Le procédé de la revendication 19, dans lequel ladite couche de couleur dudit article de transfert thermique est directement mise en contact avec la face dudit article en feuilles rétroréfléchissant sans appliquer de traitement d'apprêt.
